# EUROPEAN PATENT APPLICATION

(11) **EP 4 455 546 A1**
(43) Date of publication of application: **30.10.2024**
(21) Application number: 22914541.2
(22) Date of filing: 23.12.2022
(51) Int. Cl.: F21S 8/00, F21V 21/10

(54) **CONNECTING ASSEMBLY AND SPOTLIGHT**

(30) Priority: 27.12.2021 CN 202123359753 U
(71) Applicant: Suzhou Opple Lighting Co., Ltd., Suzhou, Jiangsu 215211 (CN); Opple Lighting Co., Ltd., Shanghai 201201 (CN)
(72) Inventor: WANG, Quanbiao, Suzhou, Jiangsu 215211 (CN)
(74) Representative: dompatent von Kreisler Selting Werner - Partnerschaft von Patent- und Rechtsanwälten mbB
(86) International application number: PCT/CN2022/141413
(87) International publication number: WO 2023/125287

(57) **Abstract**

The present application provides a connecting assembly and a spotlight. The spotlight comprises the connecting assembly. The connecting assembly comprises a link support comprising plates in the shape of the inverted Chinese character "C", wherein said plates comprise a first plate and a second plate which are provided opposite to each other, and a link cavity is formed in a gap between the first plate and the second plate; a link having one end inserted into the link cavity; and a fastener sequentially passing through the first plate, the link and the second plate, and having one end connected to the second plate. The present application provides a spotlight; a long threaded hole is directly manufactured on the link support, so that the link can be directly connected to the link support in a threaded manner, and no nut is required during link assembling, thereby making the assembling process of a guide rail spotlight simple and convenient.

## Description

The present application claims the priority of China patent application No. 202123359753.6 entitled "CONNECTING ASSEMBLY AND SPOTLIGHT" and filed on December 27, 2021, the entire contents of which are incorporated herein by reference.

### TECHNICAL FIELD

The present application relates to the technical field of lighting devices, and in particular to a connecting assembly and a spotlight.

### BACKGROUND

Spotlights generally have a connecting rod that can adjust the angle of the light-emitting surface. One end of the connecting rod is connected to a connecting-rod bracket through a rotating assembly, and the other end of the connecting rod is connected to a guide-rail box. In order to ensure aesthetic appearances of the spotlights after installation and to allow for an adjustable angle of the connecting rod, one end of the connecting rod is connected to the connecting-rod bracket through a group of fastening members.

The fastening members usually include fasteners and nuts that are fitted with each other. Because the space at the joint between the connecting rod and the lamp tube of the spotlight is very small, the nuts are difficult to be stably placed at preset positions and easy to fall off when workers hold the nuts to install the fasteners, which is inconvenient for installation.

### SUMMARY

The objective of the present application is to provide a connecting assembly and a spotlight, so as to solve the technical problem that the connecting members of the traditional spotlights are difficult to install.

The present application provides a connecting assembly, including a connecting-rod bracket including a ⊏-shaped plate, wherein the ⊏-shaped plate includes a first plate and a second plate that are oppositely arranged, and wherein a gap between the first plate and the second plate forms a connecting-rod cavity; a connecting rod, wherein one end of the connecting rod is inserted into the connecting-rod cavity; and a fastener passing through the first plate, the connecting rod and the second plate sequentially, wherein one end of the fastener is connected to the second plate.

Further, the connecting-rod bracket also includes a fixing part connected to the ⊏-shaped plate.

Further, the ⊏-shaped plate also includes a third plate, and two ends of the third plate are connected to the first plate and the second plate, respectively.

Further, the ⊏-shaped plate also includes an annular member protruding from a surface of the second plate that is at a side of the second plate away from the first plate.

Further, the first plate is provided with a first through hole; a second through hole is formed in a middle of the annular member, and penetrates through the second plate and is arranged opposite to the first through hole; the connecting rod is provided with a third through hole which is arranged opposite to the first through hole; and the fastener passes through the first through hole, the third through hole and the second through hole sequentially, and is in threaded connection with the second plate.

Further, a hole wall of the second through hole is provided with a first thread; an outer surface of one end of the fastener is provided with a second thread corresponding to the first thread; and one end of the fastener that is provided with the second thread is rotatably inserted into the second through hole.

Further, the first through hole, the third through hole and the second through hole have a same diameter.

The present application further provides a spotlight including the connecting assembly described in the foregoing.

Further, the spotlight also includes a lamp tube, wherein a notch is arranged at an edge of a top of the lamp tube; the ⊏-shaped plate of the connecting-rod bracket is installed into the notch; and a light-emitting assembly is arranged in the lamp tube.

Further, the spotlight also includes a guide-rail box, wherein one end of the connecting rod away from the connecting-rod bracket is installed to a bottom of the guide-rail box.

The present application has the beneficial effects as follows: by providing a connecting assembly and a spotlight, a long threaded hole is directly made in the connecting-rod bracket, so that the connecting rod can be in directly threaded connection with the connecting-rod bracket, and that nuts are not required to be installed in the assembling process of the connecting rod, which enables the assembling process of the spotlight to be simplified and convenient and enables the assembling efficiency to be effectively improved.

### BRIEF DESCRIPTION OF DRAWINGS

In order to explain the technical solution in the embodiments of the present application more clearly, the drawings that are necessary for the description of the embodiments will be briefly introduced below. Obviously, the drawings in the following description are only related to some embodiments of the present application. For those skilled in the art, other drawings can be obtained according to these drawings without any creative work.
FIG. 1 is a schematic structural diagram of a spotlight according to an embodiment of the present application;
FIG. 2 is a schematic diagram of an exploded structure of a spotlight according to an embodiment of the present application;
FIG. 3 is a schematic structural diagram of a lamp tube according to an embodiment of the present application;
FIG. 4 is a schematic diagram of an exploded structure of a light-emitting assembly according to an embodiment of the present application;
FIG. 5 is a schematic diagram of a partially exploded structure of an embodiment of the present application;
FIG. 6 is a schematic structural diagram of a connecting-rod bracket according to an embodiment of the present application;
FIG. 7 is a schematic structural diagram of a connecting rod of an embodiment of the present application.

### Description of reference numerals:

Guide-rail box 1, lamp tube 2, connecting-rod bracket 3, connecting rod 4, fastener 5, lamp housing 21, heat dissipation member 22, cavity 23, notch 24, cover 25, light-emitting assembly 26, ⊏-shaped plate 31, fixing plate 32, rod body 41, rotary table 42, first channel 43, second channel 44, third through hole 45, first opening 211, heat dissipation column 221, heat dissipation fin 222, second opening 251, lamp board 261, light source 262, housing body 263, light-gathering surface 264, first plate 311, second plate 312, third plate 313, connecting-rod cavity 314, first through hole 315, annular member 316, second through hole 317.

### DETAILED DESCRIPTION

In the following, the technical solutions of the embodiments of the present application will be described in a clearly and completely way in connection with the drawings related to the embodiments of the present application. Apparently, the described embodiments are just a part but not all of the embodiments of the present application. Based on the described embodiments herein, those skilled in the art can obtain other embodiment(s), without any inventive work, which should be within the scope of the present application.

Furthermore, it should be understood that the specific embodiments described herein are only used to illustrate and explain the present application, and are not used to limit the present application. In the present application, unless otherwise stated, directional words such as "top" and "bottom" usually refer to "top" and "bottom" in the actual use or working state of the device, specifically the "top" and "bottom" in the drawings; while words "inner" and "outer" are used with respect to the contour of the device.

The embodiment of the present application provides a spotlight, which is described in detail below. It should be noted that the description order of the following embodiments is not considered as a limitation to the preferred order of the embodiments.

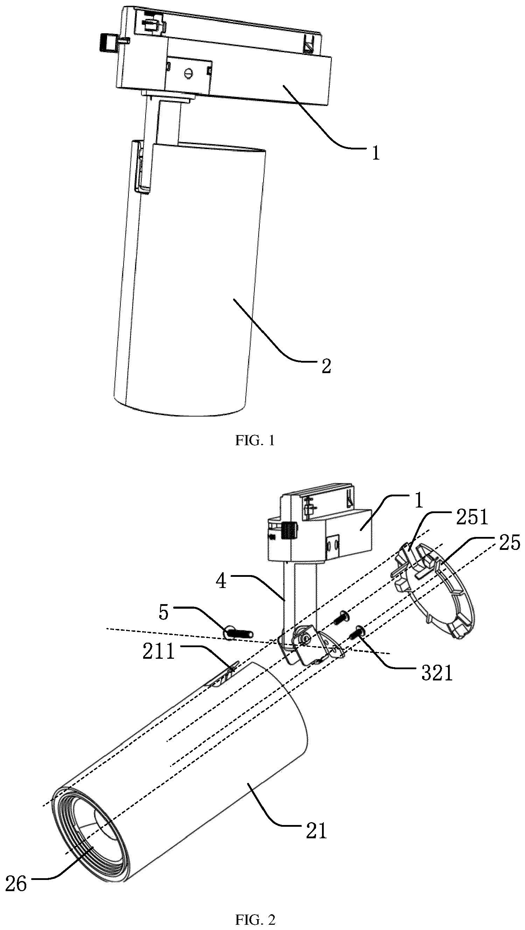

As shown in FIG. 1, this embodiment provides a spotlight, which includes a guide-rail box 1 and a lamp tube 2.

A spotlight controller for realizing lighting control is arranged in an interior of the guide-rail box 1 and includes at least one circuit board, and a plurality of electronic devices are arranged on the circuit board. A guide rail is formed at the top of the guide-rail box, and can be slidably installed in a sliding slot (not shown) which is positioned on an indoor roof or positioned at an outdoor high place, so that the spotlight can slide in the sliding slot.

As shown in FIG. 2- FIG. 3, the lamp tube 2 includes a lamp housing 21 and a heat dissipation member 22, both of which are made of metal materials with good thermal conductivity. A cavity 23 is arranged in the lamp housing 21, and the heat dissipation member 22 is arranged in the cavity 23. The heat dissipation member 22 includes a heat dissipation column 221 arranged in the middle of the cavity and a plurality of heat dissipation fins 222 that are evenly distributed. Both ends of the heat dissipation fin 222 are respectively connected to the heat dissipation column 221 and the inner sidewall of the lamp housing 21. The shape of the heat dissipation column 221 and the shape of the lamp housing 21 are preferably a cylinder, a truncated cone or an approximate truncated cone; the central axis of the heat dissipation column 221 is basically consistent with the central axis of the lamp housing 21; and the heat dissipation fins 222 are of a radial structure, which effectively increases the surface area of the heat dissipation member 22 in contact with air, improves the heat exchange efficiency, and enhances the heat dissipation effect.

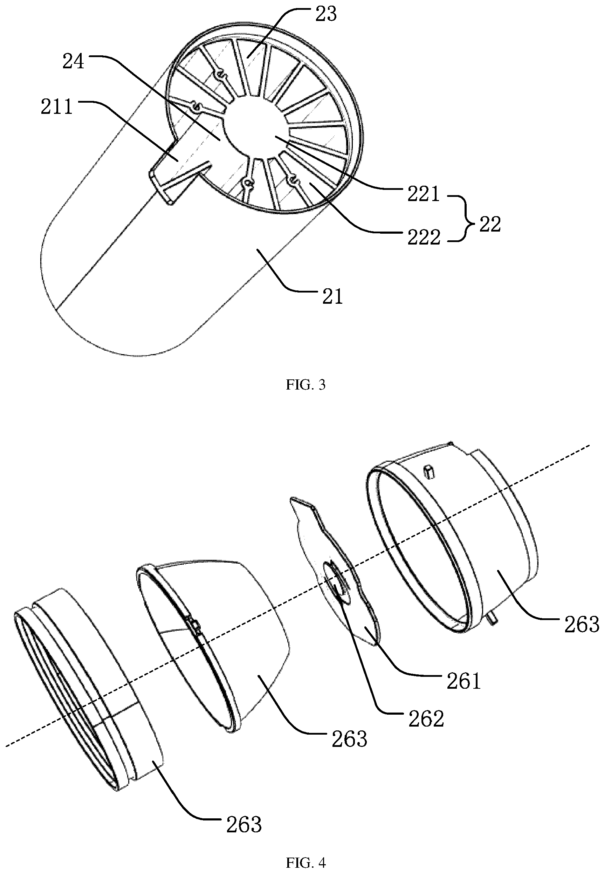

As shown in FIG. 3, the edge of the top of the lamp tube 2 is provided with a notch 24, which is formed between two heat dissipation fins and used for installing the connecting structure of the guide-rail box 1 and the lamp tube 2.

As shown in FIG. 2-FIG. 3, the sidewall of the lamp housing 21 is provided with a first opening 211, which is arranged opposite to the notch 24 and extends to the top of the sidewall of the lamp housing 21.

As shown in FIG. 2-FIG. 3, the lamp tube 2 further includes a cover 25 fixedly connected to the top of the heat dissipation member 22. The cover 25 is provided with a second opening 251, which is arranged opposite to the notch 24. The first opening 211 and the second opening 251 enable the lamp tube to rotate relative to the connecting rod 4, so as to adjust the relative angle between the lamp housing 21 and the guide-rail box 1.

As shown in FIG. 2 and FIG. 4, the lamp tube 2 further includes a light-emitting assembly 26 fixed in the cavity 23 and arranged at the bottom of the lamp housing 21. The light-emitting assembly 26 includes a lamp board 261, one side surface of which is provided with at least one light source 262, and the other side surface of which abuts against the heat dissipation fins 222. The light source 262 and the electronic devices on the lamp board 261 generate heat during operation, which is conducted out through the heat dissipation fins 222 and the lamp housing 21. The light-emitting assembly 26 also includes a housing body 263 and a light-gathering surface 264 arranged in the housing body 263. The lamp board 261 and the light source 262 are also arranged in the housing body 263, and the surface of the housing body 263 is provided with a connection member fixedly connected to the inner sidewall of the lamp housing 21.

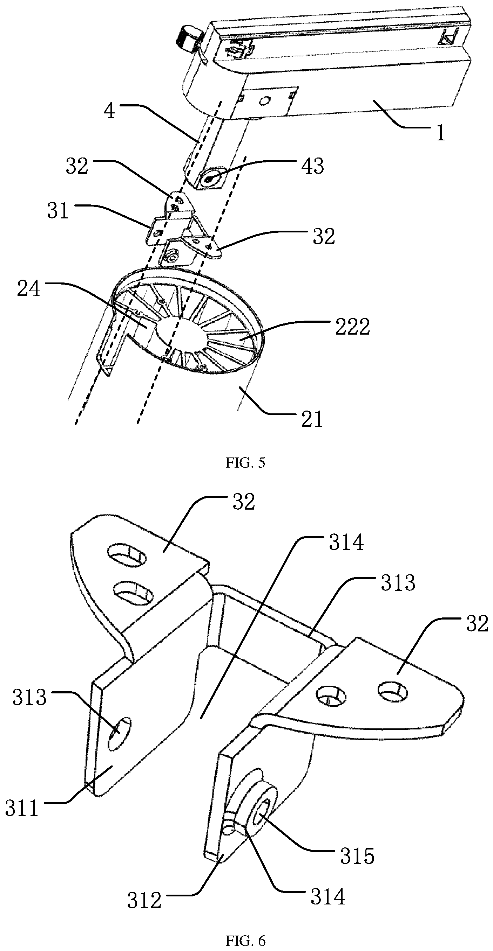

As shown in FIG. 5, the spotlight according to this embodiment further includes a connecting assembly, which includes a connecting-rod bracket 3, a connecting rod 4, and a fastener 5.

The connecting-rod bracket 3 is installed into the notch 24 of the lamp tube 2 and is fixed to the lamp housing 21 or the heat dissipation member 22. The connecting-rod bracket 3 includes a plate 31 and a fixing part; the plate 31 has a shape of a Chinese character "⊏", i.e., a C-shaped plate 31, and is installed in the notch 24; the fixing part is connected to the ⊏-shaped plate 31 and fixedly connected to the lamp housing 21.

As shown in FIG. 5-FIG 6, the ⊏-shaped plate 31 includes two opposite plates, namely a first plate 311 and a second plate 312. The ⊏-shaped plate 31 further includes a third plate 313, and both ends of the third plate 313 are vertically connected to the first plate 311 and the second plate 312, respectively. A gap is provided between the two opposite plates 311 and 312. The two plates 311 and 312 as well as the third plate 313 together delimit a connecting-rod cavity 314, which is a semi-opened cavity.

As shown in FIG. 2, FIG. 5 and FIG. 6, the fixing part includes two fixing plates 32. Each fixing plate 32 is vertically connected to the first plate 311 or the second plate 312, and is fixed to a side of the heat dissipation member 22 of the lamp tube 2 facing the guide-rail box 1. Preferably, the two fixing plates 32, as well as the two plates 311 and 312 are formed into an integrated structure.

At least one nail hole is arranged at the top of the heat dissipation fin 222, each fixing plate 32 is provided with two through holes, and the fixing plates 32 are fixedly installed to the tops of the two heat dissipation fins 222 by using screws 321 which pass through the through holes.

As shown in FIG. 6, the first plate 311 is provided with a first through hole 315, and the surface of the second plate 312 away from the first plate 311 is provided with an annular member 316. A second through hole 317 is formed in the middle of the annular member 316, and penetrates through the second plate 312 and the annular member 316, and is arranged opposite to the first through hole 315. The hole wall of the second through hole 317 is provided with a first thread (not shown).

In this embodiment, the second plate 312 of the connecting-rod bracket is partially thickened and made into a screw hole by using a metal stamping process. Specifically, a blanking process, a punching and flanging process, a tapping process and a bending process are performed successively, so that the second plate 312 with the screw hole can realize the function of a nut.

As shown in FIG. 2, the spotlight according to this embodiment further includes a connecting rod 4, the top end of which is connected to the bottom of the guide-rail box 1. The connecting rod 4 is connected to the connecting-rod bracket 3 by a fastener 5.

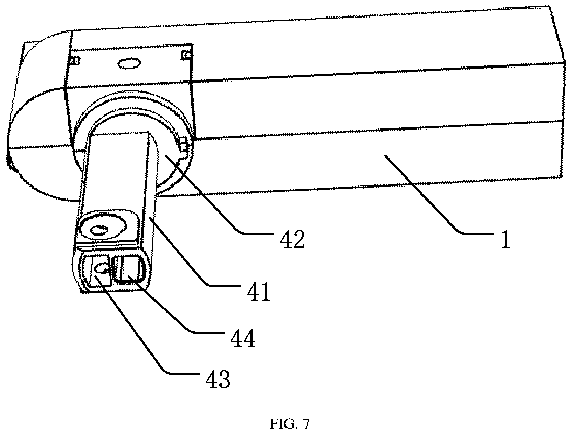

As shown in FIG. 7, the connecting rod 4 includes a rod body 41 and a rotary table 42, the rod body 41 includes two parallel channels extending from the bottom surface of the rod body 41 to the top surface of the rod body 41. The first channel 43 includes only one opening, which is arranged at the bottom surface of the rod body 41. The second channel 44 includes two openings, which are respectively arranged on the top surface and the bottom surface of the rod body 41, and are used for wires connecting the lamp board and the controller to be positioned thereon. The rotary table 42 is fixed to the top of the rod body 41 and is rotatably connected to the bottom surface of the guide-rail box 1.

The bottom end of the connecting rod 4 is inserted into the connecting-rod cavity 314, and the sidewall of the bottom end of the connecting rod 4 is provided with a third through hole 45, which is arranged to be opposite to the first through hole 315.

The fastener 5 passes through the first through hole 315, the third through hole 45 and the second through hole 317 sequentially. The fastener 5 is preferably a bolt, and the outer surface of the front end of the fastener 5 is provided with a second thread (not shown) which corresponds to and is matched with the first thread on the inner wall of the second through hole 317. The end of the fastener 5 provided with the second thread is rotatably inserted into the second through hole 317, so that the fastener 5 is in threaded connection with the connecting-rod bracket 3, and that the connecting rod 4 is fixed to the connecting-rod bracket 3.

The present application has the beneficial effects that a spotlight is provided, and a long threaded hole is directly made in the connecting-rod bracket, so that the connecting rod can be in directly threaded connection with the connecting-rod bracket, and that nuts are not required to be installed in the assembling process of the connecting rod, which enables the assembling process of the spotlight to be simplified and convenient.

As above, a guide-rail spotlight provided by the embodiments of the present application is introduced in detail. In this paper, specific examples are used to explain the principle and implementation of the present application. The description of the above embodiments is only used to assist in understanding the method and core idea of the present application. At the same time, according to the idea of the present application, there will be changes in the specific implementation and application scope for those skilled in this field. To sum up, the contents of this specification should not be understood as limitations to the present application.

## Claims

1. A connecting assembly, comprising
a connecting-rod bracket (3) comprising a ⊏-shaped plate (31), wherein the ⊏-shaped plate (31) comprises a first plate (311) and a second plate (312) that are oppositely arranged, and wherein a gap between the first plate (311) and the second plate (311) forms a connecting-rod cavity (314);
a connecting rod (4), wherein one end of the connecting rod (4) is inserted into the connecting-rod cavity (314); and
a fastener (5) passing through the first plate (311), the connecting rod (4) and the second plate (312) sequentially, wherein one end of the fastener (5) is connected to the second plate (312).

2. The connecting assembly according to claim 1, wherein
the connecting-rod bracket (3) further comprises a fixing part connected to the ⊏-shaped plate (31).

3. The connecting assembly according to claim 2, wherein
the fixing part comprises a fixing plate (32) vertically connected to the first plate (311) or the second plate (312).

4. The connecting assembly according to claim 1, wherein
the ⊏-shaped plate (31) further comprises a third plate (313), and two ends of the third plate (313) are connected to the first plate and the second plate, respectively.

5. The connecting assembly according to claim 1, wherein the ⊏-shaped plate (31) further comprises an annular member (316) protruding from a surface of the second plate (312) that is at a side of the second plate (312) away from the first plate (311).

6. The connecting assembly according to claim 5, wherein
the first plate (311) is provided with a first through hole (315);
a second through hole (317) is formed in a middle of the annular member (316), and penetrates through the second plate (312) and is arranged opposite to the first through hole (315);
the connecting rod (4) is provided with a third through hole (45) which is arranged opposite to the first through hole (315); and
the fastener passes through the first through hole (315), the third through hole (45) and the second through hole (317) sequentially, and is connected to the second plate (312).

7. The connecting assembly according to claim 6, wherein
a hole wall of the second through hole (317) is provided with a first thread, an outer surface of one end of the fastener (5) is provided with a second thread corresponding to the first thread; and
one end of the fastener (5) that is provided with the second thread is rotatably inserted into the second through hole (317).

8. A spotlight comprising the connecting assembly according to any one of claims 1-7.

9. The spotlight according to claim 8, further comprising:
a lamp tube (2), wherein a notch (24) is arranged at an edge of a top of the lamp tube; the ⊏-shaped plate (31) of the connecting-rod bracket (3) is installed into the notch (24); and a light-emitting assembly (26) is arranged in the lamp tube (2).

10. The spotlight according to claim 8, further comprising:
a guide-rail box (1), wherein one end of the connecting rod (4) away from the connecting-rod bracket (3) is installed to a bottom of the guide-rail box (1).
